# EUROPEAN PATENT SPECIFICATION

(11) **EP 3 898 294 B1**
(45) Date of publication and mention of the grant of the patent: **30.11.2022**
(21) Application number: 19817577.0
(22) Date of filing: 19.12.2019
(51) Int. Cl.: B60C 25/00, G01M 17/02

(54) **PROCESS AND APPARATUS FOR THE VISUAL CHECK OF TYRES**
VERFAHREN UND VORRICHTUNG ZUR VISUELLEN ÜBERPRÜFUNG VON FAHRZEUGLUFTREIFEN
PROCEDEE ET DISPOSITIF POUR L'INSPECTION VISUELLE DES PNEUMATIQUES

(30) Priority: 21.12.2018 IT 201800020686
(43) Date of publication of application: 27.10.2021
(73) Proprietor: Pirelli Tyre S.p.A., 20126 Milano (IT)
(72) Inventor: AUGLIERA, Luciano, 20126 Milano (IT); HELD, Alessandro, 20126 Milano (IT); ROBERTI, Lorenzo, 20126 Milano (IT)
(74) Representative: Tansini, Elio Fabrizio
(86) International application number: PCT/IB2019/061100
(87) International publication number: WO 2020/128951

(56) References cited:
- WO-A1-2011/002444
- WO-A1-2014/041964
- DE-U1-202006 011 739
- JP-A- 2006 300 678
- US-A- 4 678 163

## Description

The present invention relates to a process for the visual check of tyres. The invention further relates to an apparatus for the visual check of tyres, which can be conveniently used for carrying out the above process.

By "tyre", when not otherwise specified, it is typically meant the finished tyre, i.e. after the building, moulding and vulcanisation steps.

By "perpendicular", or "orthogonal", with respect to geometric elements (such as straight lines, planes, surfaces, etc.) it is meant that these elements (or elements parallel thereto and mutually incident) form an angle of 90°+/-15°, preferably 90°+/-10°.

By "vertical" with respect to the aforementioned geometric elements or elements in general, it is meant that these elements (or elements parallel thereto) form an angle of 90°+/-15°, preferably 90°+/-10° with the ground in operating conditions of a process, apparatus, device, etc.

By "parallel" with respect to the aforementioned geometric elements it is meant that these elements (or elements parallel thereto and mutually incident) form an angle of 0°+/-15°, preferably 0°+/-10°.

By "horizontal" with respect to the aforementioned geometric elements or elements in general, it is meant that these elements (or elements parallel thereto) form an angle of 0°+/-15°, preferably 0°+/-10° with respect to the ground in operating conditions of a process, apparatus, device, etc.

In the production of vehicle tyres it is provided that, after a building cycle in which different components of the tyre are assembled together, the tyre is subjected to a moulding and vulcanisation treatment by means of which, with a combined action of heating and pressing against the walls of a mould, the engraving of a desired pattern on the tread band and further indications and/or decorative marks at the sidewalls is obtained, at the same time as a cross-linking of the elastomeric components which determines the structural consolidation of the tyre.

Downstream of the vulcanisation, the tyre is subjected to a series of checks to verify the compliance thereof with the production specifications.

A first check, normally performed immediately upon exiting the vulcanisation process, consists of a visual inspection to verify the absence of incisions, discontinuities and/or foreign bodies on the tyre surfaces. In one or more successive steps further checks can be performed, for example to verify the weight, balance and/or dynamic behaviour of the tyre with the aid of suitable machinery.

US 3790134 describes an apparatus for inspecting and checking a tyre carcass, comprising a movement belt on which the tyre is disposed resting according to a plane perpendicular to the resting surface defined by the movement belt, and driven in rotation. Two movable arms in mutual approach and removal are provided, carrying gripping elements capable of engaging and guiding the respective inner edges of the tyre during visual inspection by an operator. Each of the movable arms may also be positioned towards and away from the movement belt. The action of the movable arms spreads the beads and the sidewalls of the tyre, while the latter is rotated on the action of the movement belt, so as to facilitate the inspection of the inner surfaces of the tyre. The outer surfaces of the tyre are also exposed to the operator for inspection purposes.

Additional examples of tyre inspecting and/or checking apparatuses are shown in WO-2011/002444A1, WO-2014/041964 A1, US-4,678,163A, DE-202006011739U1 and JP-2006300078A.

Wherein WO-2011/002444A1 is considered the closest prior art and discloses a process for the visual check of tyres comprising: loading a tyre into a visual inspection station wherein the following actions are actuated: supporting the tyre loaded in the visual inspection station according to a first visual inspection orientation, wherein a geometric rotation axis of the tyre extends horizontally in a vertical first visual inspection plane; executing at least one first visual inspection by supporting a tread band of said tyre in abutment relation on at least one pair of first support rollers spaced parallel with respect to each other and rotatable according to rotation axes parallel to said geometric rotation axis. This document further allows executing at least one sidewall visual inspection over axially outer surfaces of the tyre during the rotation thereof. A corresponding apparatus is also disclosed by this document.

The Applicant notes that the operator in charge of the use of an apparatus of the type described in US3790134 to carry out the visual check of the entire surface of the tyre, internal and external, is often positioned in front of the apparatus itself so as not to be able to better visualize some outer surfaces of the tyre, in particular the sidewalls. In fact, once the internal inspection is finished, the operator carries out the external inspection in the absence of devices capable of facilitating the movement of the tyre for this purpose. The operator therefore needs to move, perhaps thus losing the best lighting conditions, or to make sub-optimal movements from the safety point of view: modern tyres are in fact often large in size and have a significant weight, it is therefore possible that by manually handling them in order to put the entire outer surface in optimal light conditions, the operator can make movements that are harmful to his health and safety.

The Applicant has also noted that the current requirements in terms of quality make tyres with small surface defects, such as small discontinuities, even when of modest extension, for example a few square millimetres, unacceptable to the market.

It has been verified that defects of this type, especially when located in the vicinity of the sidewalls, can go unnoticed during visual inspection operations.

The Applicant has also observed that the occurrence of these surface defects, even if of a minor entity, may indicate functional anomalies in the production of the semi-finished products or in the building steps that precede the vulcanisation. The Applicant therefore realised that a reliable and timely identification of surface defects can significantly improve the production quality and the reduction of waste, allowing timely interventions on the machinery and in the process steps responsible for the occurrence of the identified defects.

The Applicant perceived that the above problems could be solved by allowing visual inspection of the entire surface of the tyre in order to keep the operator substantially stationary, remaining as much as possible in the best light and safety conditions.

To this end, the Applicant has faced the problem of having support and handling devices operatively associated with each other, so as to allow each operator to handle and observe each tyre without substantially changing his position during the checking operations, considerably improving the reliability of the check itself, while preserving his own safety.

The Applicant has found that by providing for the external visual inspection of the tyre, a handling of the same by means of a plurality of support and rotation devices, such as for example rollers or pairs of rollers, oriented differently from each other and associated with each other so as to enter or not in their operating condition, the identification of defects and discontinuities, even of small dimensions, in particular on the external surfaces of the tyre sidewalls is significantly facilitated, the visual check therefore becomes more effective and can be performed safely and even in a shorter time. More particularly, according to a first aspect, the invention relates to a process for the visual check of tyres.

Preferably, it is provided to load a tyre in a visual inspection station.

Preferably, in the visual inspection station the action of supporting the tyre loaded in the visual inspection station is carried out according to a first visual inspection orientation, in which a geometric axis of rotation of the tyre extends horizontally in a vertical first visual inspection plane. Preferably, in the visual inspection station the action of executing at least a first visual inspection is carried out by supporting a tread band of said tyre in abutment relation on at least one pair of first support rollers spaced parallel with respect to each other and rotatable according to rotation axes parallel to said geometric rotation axis.

Preferably, in the visual inspection station the action of rotating the tyre around a vertical orientation axis is carried out, in order to position it according to a sidewall check orientation wherein said geometric rotation axis lies in a vertical sidewall inspection plane, perpendicular to the vertical first visual inspection plane.

Preferably, in the visual inspection station the action of rotating around said geometric axis of rotation the tyre positioned according to the sidewall check orientation is carried out.

Preferably, in the visual inspection station the action of executing at least one sidewall visual inspection is carried out over axially outer surfaces of the tyre during the rotation thereof, positioned according to the sidewall check orientation by supporting the tread band of the tyre in abutment relation on at least one pair of second support rollers spaced parallel with respect to each other and rotatable according to rotation axes parallel to said geometric rotation axis.

Preferably, the action of rotating, around said rotation axis, the tyre positioned according to the sidewall check orientation, is preceded by the second support rollers coming into contact with said tread band, which disengages the first support rollers from said tread band.

According to a second aspect thereof, the invention relates to an apparatus for the visual check of tyres.

Preferably, the apparatus comprises a loader.

Preferably, a visual inspection station is provided configured to receive the tyre from the loader.

Preferably, said visual inspection station comprises first supports configured to rotatably support the tyre according to a first visual inspection orientation, in which a geometric axis of rotation of the tyre extends horizontally in a vertical first visual inspection plane.

Preferably, said first supports comprise at least a pair of first support rollers spaced parallel to each other and rotatable according to respective rotation axes.

Preferably, said visual inspection station comprises second supports configured to rotatably support the tyre according to a sidewall check orientation wherein said geometric rotation axis lies in a vertical sidewall inspection plane, perpendicular to the vertical first visual inspection plane.

Preferably, said second supports comprise at least a pair of second support rollers spaced parallel to each other and rotatable according to respective rotation axes.

Preferably, said visual inspection station comprises movement devices operating on the second supports in order to selectively move them between a work position and a rest position.

The Applicant believes that the appropriate orientation of the tyre with respect to the observation point during the inspection of the sidewall significantly facilitates the identification of surface defects, also reducing undesired fatigue in the attention paid by the operator during the execution of the checks.

Furthermore, the invention allows adequately orienting the tyre without having to remove it from the inspection station. In this way, undesirable physical fatigue of the operator, which tends to be more evident when handling relatively large tyres, is prevented.

In addition to a considerable reduction of returns by the market, the timely reporting of recurring defects during the visual inspection immediately following vulcanisation enables the execution of appropriate checks and any corrective actions in the process steps upstream of the vulcanisation, leading to a significant reduction in production waste and consequent economic costs.

In one or more of the above aspects, preferred embodiments of the invention may conveniently comprise at least one of the following preferential features.

Preferably, said at least one first visual inspection is executed during the rotation of the tyre around said geometric rotation axis.

Preferably, during the first visual inspection, the tyre is supported with its own tread band in abutment relation on at least one pair of first support rollers spaced parallel with respect to each other and rotatable according to rotation axes parallel to said geometric rotation axis.

Preferably, during the visual inspection of the sidewall, the tyre is supported with its own tread band in abutment relation on at least one pair of second support rollers spaced parallel with respect to each other and rotatable according to rotation axes parallel to said geometric rotation axis.

Preferably, during the sidewall visual inspection, the tyre is supported with one of the sidewalls thereof in abutment relation on at least one pair of abutment rollers arranged according to respective axes symmetrically converging towards said geometric rotation axis.

Preferably, during the sidewall visual inspection, the tyre touches the support rollers in contact areas arranged superiorly with respect to said geometric rotation axis. Preferably, during the sidewall visual inspection, the tyre is supported with one of the sidewalls thereof in abutment relation against at least one third abutment roller arranged according to a respective axis converging towards said geometric rotation axis.

Preferably, during the sidewall visual inspection, the tyre touches the third support roller in a contact area inferiorly arranged with respect to said geometric rotation axis. Preferably, during the sidewall visual inspection, the rotation axis of the tyre is tilted with respect to a horizontal direction. The Applicant believes that the inclined orientation favours the stability of the tyre during handling, and offers greater visibility of surface imperfections.

Preferably, during the sidewall visual inspection, the rotation axis of the tyre is tilted with respect to a horizontal direction, according to an angle comprised between 15° and 30°. Preferably, during the sidewall visual inspection, the rotation axis of the tyre is tilted with respect to a horizontal direction, according to an angle comprised between 18° and 27°. Preferably, after said sidewall visual inspection, the action of rotating the tyre by 180° angularly around said orientation axis is also carried out in the visual inspection station. Preferably, after said visual inspection, in the visual inspection station the action is also carried out to rotate the tyre angularly rotated by 180° around said geometric rotation axis.

Preferably, after said sidewall visual inspection, the action of performing at least a second sidewall visual inspection is also carried out in the visual inspection station on axially outer surfaces of the tyre angularly rotated by 180°, during the rotation thereof.

It is therefore possible to carry out the check on both sides of the tyre.

Preferably, during the first visual inspection and during the sidewall visual inspection, the tyre respectively has a tread band and an axially outer surface substantially directed towards a same observation point (P).

Preferably, the side resting on the support rollers is opposite to the side facing the observation point.

Preferably, said coming into contact of the second support rollers with said tread band is caused by a lifting of the second support rollers with respect to the first support rollers. The tyre is consequently released from the first supports, free to rotate around its geometric axis of rotation.

Preferably, the tyre loaded in the visual inspection station is transferred from a first inspection location, where an internal visual inspection is executed, to a second inspection location, where said first visual inspection is executed before rotating the tyre around said orientation axis.

Preferably, the transfer of the tyre from the first inspection station to the second inspection station is carried out along a loading direction orthogonal to the geometric rotation axis. Preferably, the loading of the tyre in the visual inspection station is carried out by moving the tyre along a loading direction perpendicular to the geometric rotation axis.

This facilitates the transfer of the tyre by means of a simple rolling operation around its geometric axis of rotation. Preferably, the vertical first visual inspection plane is orthogonal to the loading direction.

Preferably, the first supports comprise at least a pair of first support rollers spaced parallel to each other and rotatable according to respective rotation axes.

Preferably, the first support rollers are configured for supporting the tyre in abutment relation against a tread band of the tyre itself.

Preferably, the second supports comprise at least a pair of second support rollers spaced parallel to each other and rotatable according to respective rotation axes.

Preferably, the second support rollers are configured for supporting the tyre in abutment relation against a tread band of the tyre itself.

Preferably, the second supports also comprise at least one pair of abutment rollers arranged according to respective axes converging with respect to a vertical plane that is symmetric with respect to the second support rollers.

Preferably, the abutment rollers are configured for supporting the tyre in abutment relation against a sidewall of the tyre itself.

Preferably, the abutment rollers are arranged in an elevated position with respect to the second support rollers. Preferably, the second supports also comprise at least one third abutment roller arranged parallel and in proximity to said symmetric vertical plane.

Preferably, the third abutment roller is configured for supporting the tyre in abutment relation against a sidewall of the tyre itself.

Preferably, the third abutment roller lies in a plane that is orthogonal with respect to a common lying plane of the second support rollers.

Preferably, the third abutment roller intersects a common lying plane of the second support rollers.

Preferably, the abutment rollers lie in an inclined plane with respect to a vertical direction.

Preferably, the abutment rollers have respective axes lying in a common plane that is tilted with respect to a vertical direction, according to an angle comprised between 15° and 30°.

Preferably, the abutment rollers have respective axes lying in a common plane that is tilted with respect to a vertical direction, according to an angle comprised between 18° and 27°.

Preferably, the second support rollers have respective axes lying in a common plane perpendicular to the common lying plane of the axes of the abutment rollers.

Preferably, the second support rollers have respective axes lying in a common plane that is tilted with respect to a vertical direction, according to an angle comprised between 15° and 30°.

Preferably, the second support rollers have respective axes lying in a common plane that is tilted with respect to a vertical direction, according to an angle comprised between 18° and 27°.

Preferably, said second support rollers have said rest position lowered with respect to the working position.

Preferably, in the work position, the second supports intersect a common lying plane of the first support rollers.

The second support rollers are therefore positioned at a height suitable to support the tyre in a position slightly spaced from the first support rollers, so as not to interfere with them.

Preferably, the movement devices operate between a fixed framework carrying the first supports and a movable framework carrying the second supports.

Preferably, the movement devices comprise a fluid dynamic actuator.

Preferably, the movement devices comprise a control linkage. Preferably, the visual inspection station has a first inspection location and a second inspection location consecutively arranged along a loading direction extending away from the loader.

Preferably, the first supports and the second supports are arranged in the second inspection location.

Preferably, auxiliary supports are provided operating in the first inspection station.

Preferably, the auxiliary supports comprise at least a pair of auxiliary support rollers spaced parallel to each other and rotatable according to axes of rotation perpendicular to the loading direction.

Preferably, the auxiliary support rollers are configured for supporting the tyre in abutment relation against a tread band of the tyre itself.

Preferably, the auxiliary support rollers are motorised. Preferably, spreader arms are provided, operating in the first inspection location and each configured for slidably engaging a respective bead of the tyre and spreading it outward towards an axially outer direction.

Preferably, each of the support rollers is rotatably engaged with a respective bracket integral with one of the spreader arms.

The presence of the spreader arms is therefore advantageously used to support the support rollers, so as to allow a reduction in the number of parts and dimensions. Preferably, the loader is configured to move a tyre along a loading direction perpendicular to a geometric axis of rotation of the tyre.

Preferably, the rotation axes of the first support rollers are perpendicular to the loading direction.

Preferably, the rotation axes of the second support rollers are parallel to the loading direction.

Further features and advantages of the invention will become apparent from the following detailed description of a preferred but non-exclusive embodiment of a process and an apparatus for the visual check of tyres according to the present invention. Such a description is shown below by way of a nonlimiting example with reference to the accompanying figures, in which:

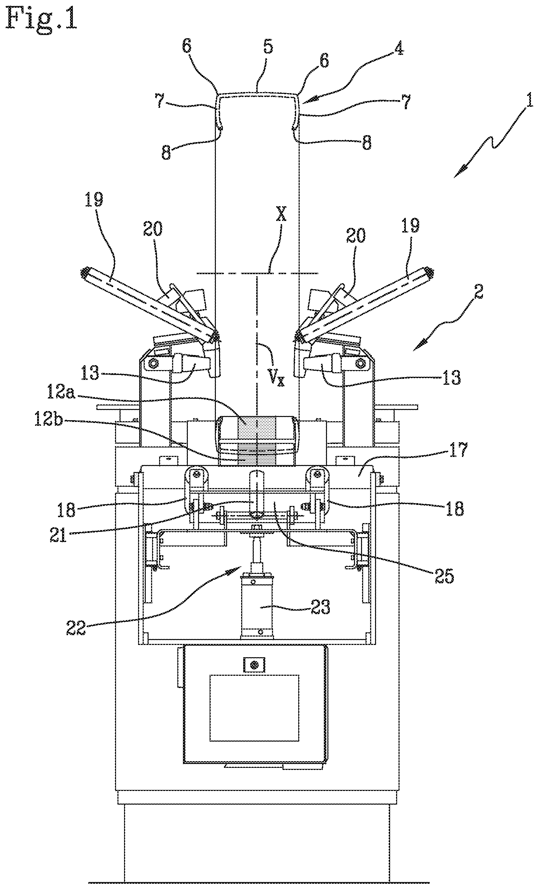

figure 1 shows a front view of an apparatus for the visual check of tyres according to the present invention;
figure 2 shows a side view of the apparatus of figure 1 during the execution of a first visual inspection;
figure 3 shows the apparatus of figure 2 during the execution of a sidewall visual inspection;

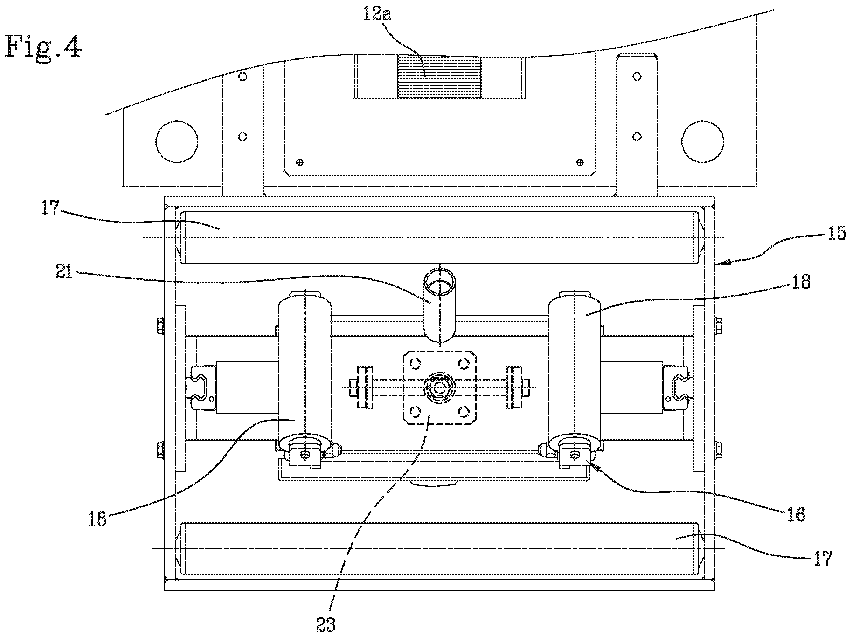

figure 4 shows the apparatus seen from above.

With reference to the above figures, reference numeral 1 identifies as a whole an apparatus for the visual check of tyres, according to the present invention.

The apparatus 1 comprises a visual inspection station 2 operatively served by a loader 3, only schematically indicated since it can be made in a known way. The loader 3 can be configured to receive tyres coming from a supply line (not shown), for example exiting a vulcanising press, to transfer them individually to the visual inspection station 2.

Each tyre, indicated as a whole with 4, usually has a tread band 5 axially delimited between two axially opposite shoulders 6, of which respective sidewalls 7 extend. Each sidewall 7 develops in a substantially radial direction towards a geometric axis of rotation X of the tyre 4, up to a respective bead 8 which defines one of the inner circumferential edges of the tyre 4 itself.

For example, the loader 3 can be configured to position the tyre 4 with its own geometric axis of rotation X arranged horizontally, and let it descend according to a loading direction indicated by the arrow C, along a feeding chute 9.

In the illustrated example, the feeding chute 9, which can be an integral part of the loader 3 itself, is connected to a first inspection station 10 and a second inspection station 11 consecutively arranged along the loading direction C away from the loader 3.

In the first inspection station 10, a first auxiliary support roller 12a and a second auxiliary support roller 12b or other auxiliary supports operate. The first auxiliary support roller 12a and the second auxiliary support roller 12b are spaced parallel to each other along the loading direction C, and rotatable according to respective rotation axes perpendicular to the loading direction itself and, therefore, parallel to the geometric axis of rotation X of the tyre 4.

The tyre 4 moved according to the loading direction C along the feeding chute 9 overcomes the first auxiliary support roller 12a, to be accommodated between the first auxiliary support roller 12a and the second auxiliary support roller 12b. Preferably, the first auxiliary support roller 12a and the second auxiliary support roller 12b are adapted to support the tyre 4 by acting in a abutment relationship against the tread band 5 of the tyre 4 itself. The first auxiliary support roller 12a and the second auxiliary support roller 12b (or at least one of them) are preferably motorised, and are adapted to be rotated to rotate the tyre 4 around its own geometric axis of rotation X.

In the first inspection station 10 a pair of spreader arms 13 also operates, each movable in an axial direction and in a radial direction with respect to the tyre 4 located between the first auxiliary support roller 12a and the second auxiliary support roller 12b. The spreader arms 13 are configured to radially fit between the beads 8 of the tyre 4 and, following a mutual axial removal, spread the beads 8 and the sidewalls 7 in an axially outer direction, keeping them spread while the same tyre 4 is driven in rotation by the first auxiliary support roller 12a and by the second auxiliary support roller 12b.

The cooperation between the first auxiliary support roller 12a, the second auxiliary support roller 12b and the spreader arms 13, facilitates the execution of an internal visual inspection of the tyre 4. During the internal visual inspection, an operator positioned in front of the visual inspection station 2 can easily check, from an own observation point P placed frontally with respect to the loading direction C, the absence of anomalies on the inner surfaces of the tyre 4, while the latter is rotated by the action of the first auxiliary support roller 12a and the second auxiliary support roller 12b at adequate angular speed, indicatively between 1 rad/sec and 2 rad/sec.

Once the internal visual inspection has been completed, the first auxiliary support roller 12a and the second auxiliary support roller 12b are stopped and the tyre 4 is disengaged by the spreader arms 13. The operator can act directly on the tyre 4 by making it roll around its own geometric axis of rotation X, so that the tyre 4 translates along the loading direction C climbing over the second auxiliary support roller 12b to reach the second inspection station 11.

In the second inspection station 11 first supports 15 and second supports 16 operate, preferably comprising at least a pair of wheels or first support rollers 17 and, respectively, at least a second pair of rollers or second support rollers 18, spaced parallel to each other and rotatable according to respective rotation axes.

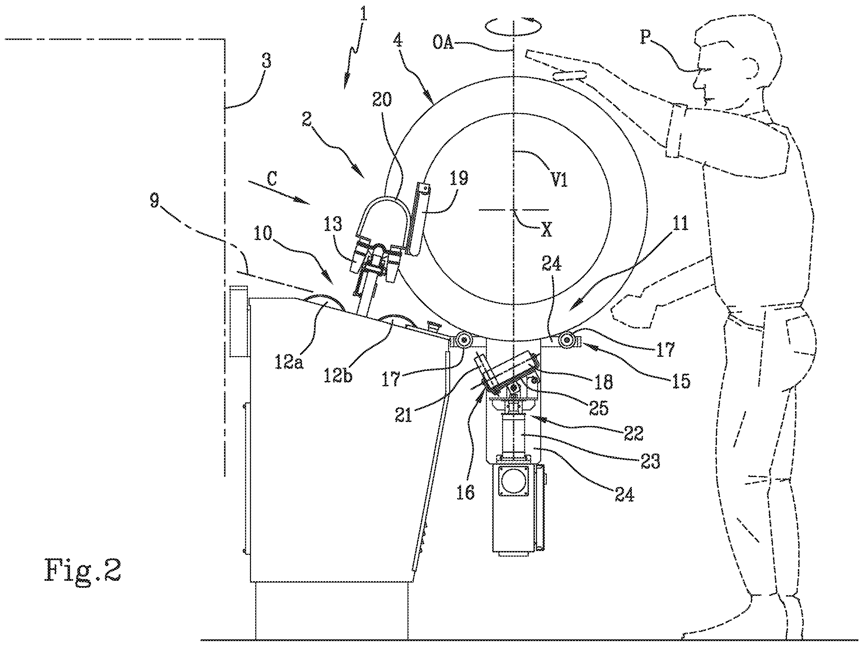

The first support rollers 17, preferably oriented according to respective axes of rotation perpendicular to the loading direction C, are preferably configured to support the tyre 4 in an abutment relationship against the tread band 5, so as to rotatably support the tyre 4 according to a first visual inspection orientation in which, as in figure 2, the geometric axis of rotation X of the tyre 4 extends horizontally in a vertical first visual inspection plane V1, orthogonal to the loading direction C.

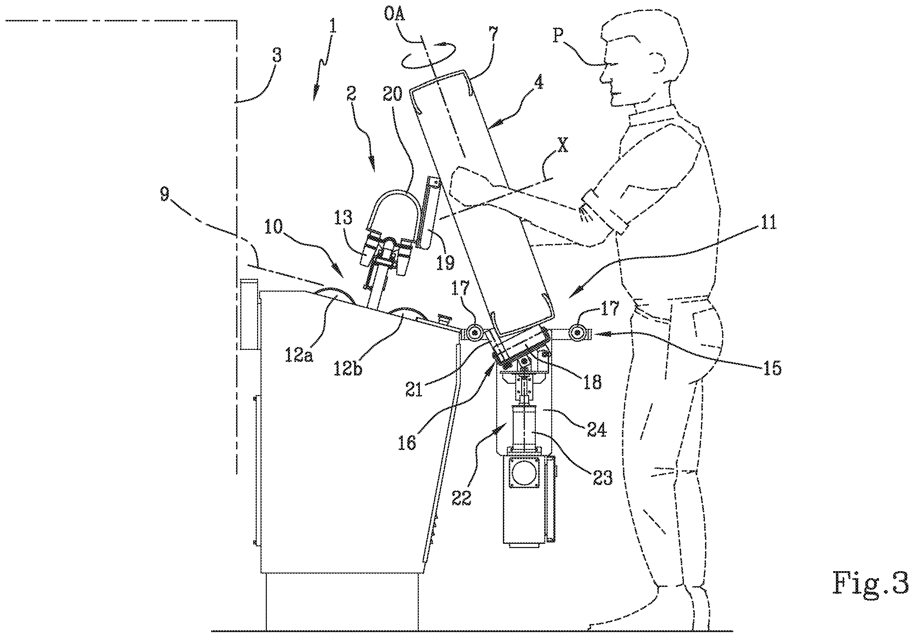

The second support rollers 18, oriented according to respective rotation axes which lie on planes parallel to the loading direction C, are in turn configured to support the tyre 4 in an abutment relationship against the tread band 5, so as to rotatably support the tyre 4 according to a sidewall check orientation in which, as shown in figure 3, the geometric axis of rotation X lies in a vertical sidewall inspection plane, perpendicular to the vertical first visual inspection plane V1. Preferably, the second supports 16 also comprise at least one pair of abutment rollers 19 arranged according to respective axes symmetrically converging with respect to a vertical plane Vx that is symmetric with respect to the second support rollers 18.

Each of the support rollers 19 may be rotatably engaged with a respective bracket 20 integral with one of the spreader arms 13.

Furthermore, at least a third abutment roller 21 is preferably provided, the rotation axis of which is arranged at or in the vicinity of the symmetrical vertical plane Vx, parallel thereto, preferably in an orthogonal plane with respect to a common lying plane of the second support rollers 18.

The abutment rollers 19, arranged in an elevated position with respect to the second support rollers 18, preferably with the third abutment roller 21 intersecting a common lying plane of the second support rollers themselves, are configured to support the tyre 4 in an abutment relationship against one of the sidewalls 7.

It is preferably provided that the axes of the abutment rollers 19 lie according to a single plane, inclined with respect to a vertical direction, indicatively according to an angle comprised between 15° and 30°, preferably between 18° and 27°.

Preferably, the axes of the second support rollers 18 lie in a common plane perpendicular to the lying plane of the axes of the abutment rollers 19, and/or preferably inclined with respect to a horizontal direction, indicatively by an angle of between 15° and 30°, preferably between 18° and 27°.

The second support rollers 18 are operatively associated with movement devices 22 to selectively move them between a working position, in which the second support rollers 18 intersect a common lying plane of the first support rollers 17, and a rest position, lowered with respect to the working position.

In the illustrated example, the movement devices 22 comprise a fluid dynamic actuator 23 which can be activated on operator's command and operates between a fixed framework 24 carrying the first support rollers 17, and a movable framework 25 carrying the second support rollers 18. Alternatively, the fluid dynamic actuator 23 can be replaced by a mechanical control lever, which can be activated by the operator, for example by means of a pedal.

When it is moved from the first inspection station 10 to the second inspection station 11, the tyre 4 is inserted with its lower part between the first support rollers 17, and is therefore rotatably supported by the same rollers, which act at the tread band 5 as in figure 2. The second support rollers 18 stay in the rest position, at a level sufficiently lower than the first support rollers 17, so as not to interfere with the tyre 4 supported by the latter.

In this circumstance, the tyre 4 is adapted to be easily rotated around its geometric axis of rotation X, by means of simple manual actions by the operator. By rotating the tyre 4, the operator can carry out a first visual inspection, for example focused on checking the absence of defects on the entire outer surface extension of the tread band 5. The operator can also perform, in conjunction with the first visual inspection, finishing operations, possibly with the aid of suitable tools, for example for the elimination of excess burrs or other processing residues left by the previous moulding and vulcanisation treatment, or other previous process steps. Alternatively, the first visual inspection on the tread band 5 can be performed when the tyre 4 is still engaged in the first inspection station 10.

Once the first visual inspection has been completed, the tyre 4 is adapted to be placed on the second supports 16, for carrying out at least one further visual inspection, herein called "sidewall visual inspection". To this end, the operator imposes on the tyre 4 a rotation around a vertical orientation axis OA, orthogonal to the geometric axis of rotation X, to position the tyre itself according to the sidewall check orientation illustrated in figure 3.

Immediately before or, preferably, immediately after this rotation action around the orientation axis OA, the operator controls the actuation of the fluid dynamic actuator 23 which causes the second support rollers 18 to be raised from the rest position to the working position.

Upon reaching the working position, the tyre 4 is supported by the second support rollers 18, in a slightly raised position with respect to the first support rollers 17. When it has correctly assumed the sidewall check orientation, the tyre 4 is also supported, by means of its sidewall 7 opposite to that facing the observation point P, against the pair of abutment rollers 19 and against the third abutment roller 21, whose respective axes of rotation substantially converge towards the geometric axis of rotation X of the tyre 4 itself. More specifically, the tyre 4, arranged with its own geometrical axis of rotation X inclined with respect to a horizontal direction, touches the pair of support rollers 19 in respective contact areas superiorly arranged with respect to the geometrical axis of rotation X, while a lower part of the tyre 4 itself lies against the third abutment roller 21.

The tyre 4 is thus stably supported by the second support rollers 18, by the pair of abutment rollers 19, and by the third abutment roller 21, free to rotate around its own geometric axis of rotation X. The operator can manually act on the tyre 4 making it easily rotate around its own geometric axis of rotation X, and simultaneously perform a sidewall visual inspection on the entire development of the axially outer surfaces of the tyre 4 itself, substantially facing towards the same observation point P previously used during the first visual inspection.

The surfaces of the sidewall 7 are favourably turned towards the observation point P and it is easy for the operator to appropriately move the observation point P according to the angle of incidence of the ambient light, so as to find the most favourable position for identifying discontinuities and/or defects on the tyre 4 while the latter is rotated as described. Once a first sidewall inspection has been completed on one of the two axially opposite sides of tyre 4, the latter is rotated by 180° angularly around the orientation axis OA, to expose the other sidewall to perform a second sidewall inspection. The second sidewall visual inspection can be carried out in a similar way to that previously described, by manually rotating the tyre 4 around its own geometric axis of rotation X.

At the end of the second sidewall visual inspection, the operator can make any identifying markings on the tyre 4 if the visual check test is passed or not, and transfer the tyre 4 onto a transport surface (not shown), to remove it from the visual inspection station 2.

## Claims

1. Process for the visual check of tyres, comprising:
loading a tyre (4) into a visual inspection station (2) wherein the following actions are actuated:
supporting the tyre (4) loaded in the visual inspection station (2) according to a first visual inspection orientation, wherein a geometric rotation axis (X) of the tyre (4) extends horizontally in a vertical first visual inspection plane (V1);
executing at least one first visual inspection by supporting a tread band (5) of said tyre (4) in abutment relation on at least one pair of first support rollers (17) spaced parallel with respect to each other and rotatable according to rotation axes parallel to said geometric rotation axis (X);
rotating the tyre (4) around a vertical orientation axis (OA), in order to position it according to a sidewall check orientation wherein said geometric rotation axis (X) lies in a vertical sidewall inspection plane, perpendicular to the vertical first visual inspection plane (V1);
rotating, around said geometric rotation axis (X), the tyre (4) positioned according to the sidewall check orientation;
executing at least one sidewall visual inspection over axially outer surfaces of the tyre (4) during the rotation thereof, positioned according to the sidewall check orientation by supporting the tread band (5) of the tyre (4) in abutment relation on at least one pair of second support rollers (18) spaced parallel with respect to each other and rotatable according to rotation axes parallel to said geometric rotation axis (X);
wherein the action of rotating, around said rotation axis, the tyre (4) positioned according to the sidewall check orientation, is preceded by the second support rollers (18) coming into contact with said tread band (5), which disengages the first support rollers (17) from said tread band (5).

2. Process according to claim 1, wherein during the sidewall visual inspection, the tyre (4) is supported with one of the sidewalls (7) thereof in abutment relation on at least one pair of abutment rollers (19) arranged according to respective axes symmetrically converging towards said geometric rotation axis (X).

3. Process according to one or more of the preceding claims, wherein during the sidewall visual inspection, the tyre (4) is supported with one of the sidewalls (7) thereof in abutment relation against at least one third abutment roller (21) arranged according to a respective axis converging towards said geometric rotation axis (X).

4. Process according to one or more of the preceding claims, wherein during the sidewall visual inspection, the rotation axis of the tyre (4) is tilted with respect to a horizontal direction.

5. Process according to one or more of the preceding claims, wherein after said sidewall visual inspection, the following actions are also actuated in the visual inspection station (2):
angularly rotating, by 180°, the tyre (4) around said orientation axis (OA);
rotating, around said geometric rotation axis (X), the tyre (4) angularly rotated by 180°;
executing at least one second sidewall visual inspection over axially outer surfaces of the tyre (4) that was angularly rotated by 180°, during the rotation thereof.

6. Process according to one or more of the preceding claims, wherein said coming into contact of the second support rollers (18) with said tread band (5) is caused by a lifting of the second support rollers (18) with respect to the first support rollers (17).

7. Process according to one or more of the preceding claims, wherein the tyre (4) loaded in the visual inspection station (2) is transferred from a first inspection location (10), where an internal visual inspection is executed, to a second inspection location (11), where said first visual inspection is executed before rotating the tyre (4) around said orientation axis (OA).

8. Apparatus for the visual check of tyres, comprising:
a loader (3);
a visual inspection station (2) configured for receiving the tyre (4) from the loader (3), wherein said visual inspection station (2) comprises:
first supports (15) configured for rotatably supporting the tyre (4) according to a first visual inspection orientation, wherein a geometric rotation axis (X) of the tyre (4) extends horizontally in a vertical first visual inspection plane (V1), said first supports (15) comprising at least one pair of first support rollers (17) spaced parallel with respect to each other and rotatable according to respective rotation axes;
second supports (16) configured for rotatably supporting the tyre (4) according to a sidewall check orientation wherein said geometric rotation axis (X) lies in a vertical sidewall inspection plane, perpendicular to the vertical first visual inspection plane (V1), said second supports (16) comprising at least one pair of second support rollers (18) spaced parallel with respect to each other and rotatable according to respective rotation axes;
movement devices (22) operating on the second supports (16) in order to selectively move them between a work position and a rest position.

9. Apparatus according to claim 8, wherein the second supports (16) also comprise at least one pair of abutment rollers (19) arranged according to respective axes converging with respect to a vertical plane (Vx) that is symmetric with respect to the second support rollers (18).

10. Apparatus according to claim 9, wherein the second supports (16) also comprise at least one third abutment roller (21) arranged parallel and in proximity to said symmetric vertical plane (Vx).

11. Apparatus according to claim 9 or 10, wherein the abutment rollers (19) have respective axes lying in a common plane that is tilted with respect to a vertical direction.

12. Apparatus according to one or more of claims 8 to 11, wherein said second supports (16) have said rest position lowered with respect to the work position.

13. Apparatus according to claim 12, wherein the movement devices (22) operate between a fixed framework (24) carrying the first supports (15) and a movable framework (25) carrying the second supports (16).

14. Apparatus according to one or more of claims 8 to 13, wherein the visual inspection station (2) has a first inspection location (10) and a second inspection location (11) consecutively arranged along a loading direction (C) extending away from the loader (3).

15. Apparatus according to claim 14, wherein the first supports (15) and the second supports (16) are arranged in the second inspection location (11).

## Patentansprüche

1. Verfahren zur visuellen Überprüfung von Reifen, umfassend:
Laden eines Reifen (4) in eine visuelle Inspektionsstation (2), wo die folgenden Vorgänge ausgeführt werden:
Halten des Reifens (4), der in die visuelle Inspektionsstation (2) geladen wurde, gemäß einer ersten visuellen Inspektionsorientierung, wobei eine geometrische Drehachse (X) des Reifens (4) horizontal in einer vertikalen ersten visuellen Inspektionsebene (V1) verläuft;
Ausführen zumindest einer ersten visuellen Inspektion durch Halten eines Laufflächenrings (5) des Reifens (4) in anliegender Beziehung an zumindest einem Paar von ersten Stützrollen (17), die parallel in Bezug aufeinander beabstandet sind und gemäß Drehachsen, die parallel zu der geometrischen Drehachse (X) sind, drehbar sind;
Drehen des Reifens (4) um eine vertikale Orientierungsachse (OA), um ihn gemäß einer Seitenwand-Überprüfungsorientierung zu positionieren, in welcher die geometrische Drehachse (X) in einer vertikalen Seitenwand-Inspektionsebene liegt, die senkrecht zu der vertikalen ersten visuellen Inspektionsebene (V1) ist;
Drehen des Reifens (4), der gemäß der Seitenwand-Überprüfungsorientierung positioniert wurde, um die geometrische Drehachse (X);
Ausführen zumindest einer visuellen Seitenwand-Inspektion über axial äußeren Oberflächen des Reifens (4) während der Drehung desselben und dieser gemäß der Seitenwand-Überprüfungsorientierung positioniert ist, durch Halten des Laufflächenrings (5) des Reifens (4) in anliegender Beziehung an zumindest einem Paar von zweiten Stützrollen (18), die parallel in Bezug aufeinander beabstandet und gemäß Drehachsen, die parallel zu der geometrischen Drehachse (X) sind, drehbar sind;
wobei dem Vorgang des Drehens des Reifens (4), der gemäß der Seitenwand-Überprüfungsorientierung positioniert ist, um die Drehachse vorausgeht, dass die zweiten Stützrollen (18) mit dem Laufflächenring (5) in Kontakt gelangen, wodurch die ersten Stützrollen (17) von dem Laufflächenring (5) gelöst werden.

2. Verfahren nach Anspruch 1, wobei während der visuellen Seitenwand-Inspektion der Reifen (4) mit einem der Seitenwände (7) desselben in anliegender Beziehung an zumindest einem Paar von Anliegerollen (19) gehalten wird, die gemäß jeweiligen Achsen angeordnet sind, die symmetrisch zu der geometrischen Drehachse (X) hin zusammenlaufen.

3. Verfahren nach einem oder mehreren der vorhergehenden Ansprüche, wobei während der visuellen Seitenwand-Inspektion der Reifen (4) mit einer der Seitenwände (7) desselben in anliegender Beziehung gegen zumindest eine dritte Anliegerolle (21) gehalten wird, die gemäß einer jeweiligen Achse angeordnet ist, die zu der geometrischen Drehachse (X) hin zusammenläuft.

4. Verfahren nach einem oder mehreren der vorhergehenden Ansprüche, wobei während der visuellen Seitenwand-Inspektion die Drehachse des Reifens (4) in Bezug auf die horizontale Richtung gekippt ist.

5. Verfahren nach einem oder mehreren der vorhergehenden Ansprüche, wobei nach der visuellen Seitenwand-Inspektion in der visuellen Inspektionsstation (2) auch die folgenden Vorgänge durchgeführt werden:
Drehen des Reifens (4) im Winkel von 180° um die Orientierungsachse (OA);
Drehen des im Winkel von 180° um die Orientierungsachse (OA) gedrehten Reifens (4) um die geometrische Drehachse (X);
Ausführen zumindest einer zweiten visuellen Seitenwand-Inspektion über axial äußere Oberflächen des Reifens (4), der im Winkel von 180° gedreht wurde, während der Drehung desselben.

6. Verfahren nach einem oder mehreren der vorhergehenden Ansprüche, wobei das Inkontaktgelangen der zweiten Stützrollen (18) mit dem Laufflächenring (5) durch ein Anheben der zweiten Stützrollen (18) in Bezug auf die ersten Stützrollen (17) verursacht wird.

7. Verfahren nach einem oder mehreren der vorhergehenden Ansprüche, wobei der Reifen (4), der in die visuelle Inspektionsstation (2) geladen ist, von einer ersten Inspektionsstelle (10), wo eine visuelle Inneninspektion ausgeführt wird, zu einer zweiten Inspektionsstelle (11) überführt wird, wo die erste visuelle Inspektion ausgeführt wird, bevor der Reifen (4) um die Orientierungsachse (OA) gedreht wird.

8. Vorrichtung zur visuellen Überprüfung von Reifen, umfassend:
eine Beladungseinrichtung (3);
eine visuelle Inspektionsstation (2), die dazu ausgestaltet ist, den Reifen (4) von der Beladungseinrichtung (3) aufzunehmen, wobei die visuelle Inspektionsstation (2) umfasst:
erste Stützen (15), die dazu ausgestaltet sind, den Reifen (4) gemäß einer ersten visuellen Inspektionsorientierung drehbar zu stützen, wobei eine geometrische Drehachse (X) des Reifens (4) horizontal in einer vertikalen ersten visuellen Inspektionsebene (V1) verläuft, wobei die ersten Stützen (15) zumindest ein Paar von ersten Stützrollen (17) umfassen, die parallel in Bezug aufeinander beabstandet und gemäß jeweiligen Drehachsen drehbar sind;
zweite Stützen (16), die dazu ausgestaltet sind, den Reifen (4) gemäß einer Seitenwand-Überprüfungsorientierung drehbar zu stützen, wobei die geometrische Drehachse (X) in einer vertikalen Seitenwand-Inspektionsebene liegt, die senkrecht zu der vertikalen ersten visuellen Inspektionsebene (V1) ist, wobei die zweiten Stützen (16) zumindest ein Paar von zweiten Stützrollen (18) umfassen, die parallel in Bezug aufeinander beabstandet sind und gemäß jeweiligen Drehachsen drehbar sind;
Bewegungseinrichtungen (22), die auf die zweiten Stützen (16) wirken, um diese selektiv zwischen einer Arbeitsposition und einer Ruheposition zu bewegen.

9. Vorrichtung nach Anspruch 8, wobei die zweiten Stützen (16) auch zumindest ein Paar von Anliegerollen (19) umfassen, die gemäß jeweiligen Achsen angeordnet sind, die in Bezug auf eine vertikale Ebene (Vx), die symmetrisch in Bezug auf die zweiten Stützrollen (18) ist, zusammenlaufen.

10. Vorrichtung nach Anspruch 9, wobei die zweiten Stützrollen (16) auch zumindest eine dritte Anliegerolle (21) umfassen, die parallel zu und in der Nähe der symmetrischen vertikalen Ebene (Vx) angeordnet ist.

11. Vorrichtung nach Anspruch 9 oder 10, wobei die Anliegerollen (19) jeweilige Achsen aufweisen, die in einer gemeinsamen Ebene liegen, die in Bezug auf eine vertikale Richtung gekippt ist.

12. Vorrichtung nach einem oder mehreren der Ansprüche 8 bis 11, wobei die Anliegerollen (16) die Ruheposition aufweisen, die in Bezug auf die Arbeitsposition abgesenkt ist.

13. Vorrichtung nach Anspruch 12, wobei die Bewegungseinrichtungen (22) zwischen einem fixen Rahmen (24), der die ersten Stützen (15) trägt, und einem beweglichen Rahmen (25), der die zweiten Stützen (16) trägt, wirken.

14. Vorrichtung nach einem oder mehreren der Ansprüche 8 bis 13,
wobei die visuelle Inspektionsstation (2) eine erste Inspektionsstelle (10) und eine zweite Inspektionsstelle (11) aufweist, die in einer Beladungsrichtung (C), die sich von der Beladungseinrichtung (3) weg erstreckt, aufeinander folgend angeordnet sind.

15. Vorrichtung nach Anspruch 14, wobei die ersten Stützen (15) und die zweiten Stützen (16) in der zweiten Inspektionsstelle (11) angeordnet sind.

## Revendications

1. Procédé pour le contrôle visuel de pneus, comprenant :
le chargement d'un pneu (4) dans un poste d'inspection visuelle (2) dans lequel les actions suivantes sont activées :
le support du pneu (4) chargé dans le poste d'inspection visuelle (2) selon une première orientation d'inspection visuelle, où un axe de rotation géométrique (X) du pneu (4) s'étend horizontalement dans un premier plan d'inspection visuelle vertical (V1) ;
l'exécution d'au moins une première inspection visuelle en supportant une bande de roulement (5) dudit pneu (4) en relation de butée sur au moins une paire de premiers rouleaux de support (17) espacés parallèlement l'un par rapport à l'autre et pouvant tourner selon des axes de rotation parallèles audit axe de rotation géométrique (X) ;
la rotation du pneu (4) autour d'un axe d'orientation vertical (OA), afin de le positionner selon une orientation de contrôle de flanc dans laquelle ledit axe de rotation géométrique (X) se trouve dans un plan d'inspection de flanc vertical, perpendiculaire au premier plan d'inspection visuelle vertical (V1) ;
la rotation, autour dudit axe de rotation géométrique (X), du pneu (4) positionné selon l'orientation de contrôle de flanc ;
l'exécution d'au moins une inspection visuelle de flanc sur des surfaces axialement externes du pneu (4) pendant la rotation de celui-ci, positionné selon l'orientation de contrôle de flanc en supportant la bande de roulement (5) du pneu (4) en relation de butée sur au moins une paire de deuxièmes rouleaux de support (18) espacés parallèlement l'un par rapport à l'autre et pouvant tourner selon des axes de rotation parallèles audit axe de rotation géométrique (X) ;
dans lequel l'action de rotation, autour dudit axe de rotation, du pneu (4) positionné selon l'orientation de contrôle de flanc, est précédée par la mise en contact des deuxièmes rouleaux de support (18) avec ladite bande de roulement (5), ce qui désengage les premiers rouleaux de support (17) de ladite bande de roulement (5).

2. Procédé selon la revendication 1, dans lequel lors de l'inspection visuelle de flanc, le pneu (4) est supporté avec l'un des flancs (7) de celui-ci en relation de butée sur au moins une paire de rouleaux de butée (19) agencés selon des axes respectifs convergeant symétriquement vers ledit axe de rotation géométrique (X).

3. Procédé selon une ou plusieurs des revendications précédentes, dans lequel, lors de l'inspection visuelle de flanc, le pneu (4) est supporté avec l'un des flancs (7) de celui-ci en relation de butée contre au moins un troisième rouleau de butée (21) agencé selon un axe respectif convergeant vers ledit axe de rotation géométrique (X).

4. Procédé selon une ou plusieurs des revendications précédentes, dans lequel lors de l'inspection visuelle de flanc, l'axe de rotation du pneu (4) est incliné par rapport à une direction horizontale.

5. Procédé selon une ou plusieurs des revendications précédentes, dans lequel après ladite inspection visuelle de flanc, les actions suivantes sont également activées dans le poste d'inspection visuelle (2) :
la rotation angulaire, de 180°, du pneu (4) autour dudit axe d'orientation (OA) ;
la rotation, autour dudit axe de rotation géométrique (X), du pneu (4) tourné angulairement de 180° ;
l'exécution d'au moins une deuxième inspection visuelle de flanc sur des surfaces axialement externes du pneu (4) qui a été tourné angulairement de 180°, pendant la rotation de celui-ci.

6. Procédé selon une ou plusieurs des revendications précédentes, dans lequel ladite mise en contact des deuxièmes rouleaux de support (18) avec ladite bande de roulement (5) est provoquée par un soulèvement des deuxièmes rouleaux de support (18) par rapport aux premiers rouleaux de support (17).

7. Procédé selon une ou plusieurs des revendications précédentes, dans lequel le pneu (4) chargé dans le poste d'inspection visuelle (2) est transféré d'un premier emplacement d'inspection (10), dans lequel une inspection visuelle interne est exécutée, à un deuxième emplacement d'inspection (11), dans lequel ladite première inspection visuelle est exécutée avant de faire tourner le pneu (4) autour dudit axe d'orientation (OA).

8. Appareil pour le contrôle visuel de pneus, comprenant :
un chargeur (3) ;
un poste d'inspection visuelle (2) configuré pour recevoir le pneu (4) du chargeur (3), où ledit poste d'inspection visuelle (2) comprend :
des premiers supports (15) configurés pour supporter en rotation le pneu (4) selon une première orientation d'inspection visuelle, où un axe de rotation géométrique (X) du pneu (4) s'étend horizontalement dans un premier plan d'inspection visuelle vertical (V1), lesdits premiers supports (15) comprenant au moins une paire de premiers rouleaux de support (17) espacés parallèlement l'un par rapport à l'autre et pouvant tourner selon des axes de rotation respectifs ;
des deuxièmes supports (16) configurés pour supporter en rotation le pneu (4) selon une orientation de contrôle de flanc où ledit axe de rotation géométrique (X) se trouve dans un plan d'inspection de flanc vertical, perpendiculaire au premier plan d'inspection visuelle vertical (V1), lesdits deuxièmes supports (16) comprenant au moins une paire de deuxièmes rouleaux de support (18) espacés parallèlement l'un par rapport à l'autre et pouvant tourner selon des axes de rotation respectifs ;
des dispositifs de déplacement (22) agissant sur les deuxièmes supports (16) afin de les déplacer sélectivement entre une position de travail et une position de repos.

9. Appareil selon la revendication 8, dans lequel les deuxièmes supports (16) comprennent également au moins une paire de rouleaux de butée (19) agencés selon des axes respectifs convergeant par rapport à un plan vertical (Vx) qui est symétrique par rapport aux deuxièmes rouleaux de support (18).

10. Appareil selon la revendication 9, dans lequel les deuxièmes supports (16) comprennent également au moins un troisième rouleau de butée (21) agencé parallèlement à et à proximité dudit plan vertical symétrique (Vx).

11. Appareil selon la revendication 9 ou 10, dans lequel les rouleaux de butée (19) ont des axes respectifs se trouvant dans un plan commun qui est incliné par rapport à une direction verticale.

12. Appareil selon une ou plusieurs des revendications 8 à 11, dans lequel lesdits deuxièmes supports (16) ont ladite position de repos abaissée par rapport à la position de travail.

13. Appareil selon la revendication 12, dans lequel les dispositifs de déplacement (22) fonctionnent entre une ossature fixe (24) portant les premiers supports (15) et une ossature mobile (25) portant les deuxièmes supports (16) .

14. Appareil selon une ou plusieurs des revendications 8 à 13, dans lequel le poste d'inspection visuelle (2) a un premier emplacement d'inspection (10) et un deuxième emplacement d'inspection (11) agencés consécutivement le long d'une direction de chargement (C) s'étendant loin du chargeur (3).

15. Appareil selon la revendication 14, dans lequel les premiers supports (15) et les deuxièmes supports (16) sont agencés dans le deuxième emplacement d'inspection (11) .
